# DEMANDE DE BREVET EUROPEEN

(11) **EP 1 400 887 A1**
(43) Date de publication de la demande: **24.03.2004**
(21) Numéro de dépôt: 02078923.6
(22) Date de dépôt: 20.09.2002
(51) Int. Cl.: G06F 1/00

(54) **Dispositif de protection pour puce électronique comportant des informations confidentielles**

(71) Demandeur: EM Microelectronic-Marin SA, 2074 Marin (CH)
(72) Inventeur: Jacob, Peter, 8041 Zürich (CH); Thiemann, Uwe, 2078 Gals (CH); Blangy, Hugues, 2000 Neuchatel (CH); Walter, Fabrice, 2074 Marin (CH)
(74) Mandataire: Ravenel, Thierry Gérard Louis

(57) **Abrégé**

Il est décrit un dispositif de protection pour puce électronique comportant au moins une région dans laquelle des données sensibles sont traitées et/ou stockées, permettant d'empêcher un opérateur externe d'accéder à ces données sensibles. Dans ce but, une surface de protection recouvre au moins cette région de la puce et est reliée à un circuit de protection comportant des moyens pour détecter une atteinte de nature électrique portée à la surface de protection. Le circuit de protection comporte en outre des moyens pour détruire les données sensibles en réponse à la détection d'une attaque, ainsi que des moyens supplémentaires pour procéder à la destruction des données à la mise sous tension suivante de la puce si cette dernière n'était pas alimentée au moment de l'attaque.

## Description

La présente invention concerne un circuit intégré électronique comprenant un substrat semi-conducteur surmonté d'une couche active dans laquelle sont notamment intégrés des composants électroniques et comportant au moins une région dans laquelle des données sensibles sont traitées et/ou stockées, au moins une couche de passivation surmontant la couche active, et au moins une surface de protection réalisée en un matériau électriquement conducteur disposée à un niveau supérieur à celui de la couche active et recouvrant au moins ladite région de la couche active dans laquelle les données sensibles sont traitées et/ou stockées, la couche active comportant en outre un circuit de protection comprenant des moyens pour mettre en oeuvre des mesures de protection ou de destruction de ladite région dans laquelle les données sensibles sont traitées et/ou stockées en cas de tentative de suppression de la surface de protection, ledit circuit de protection étant relié au moins indirectement à ladite région dans laquelle les données sensibles sont traitées et/ou stockées.

De tels circuits intégrés sont connus de l'art antérieur, tel que dans le brevet européen N° 0 169 941 par exemple. En effet, ce brevet décrit un circuit intégré comportant un dispositif de protection, destiné à protéger le circuit contre des tentatives d'accès physiques à des données sensibles stockées dans des zones mémoires du circuit intégré. Ce dispositif de protection comprend au moins une couche de protection, préférablement deux, réalisée en un matériau électriquement conducteur et recouvrant les parties actives du circuit intégré, notamment les zones mémoires susmentionnées. Ainsi, un pirate souhaitant accéder aux données stockées dans ces zones mémoires doit retirer au moins partiellement la couche de protection. Toutefois, le dispositif comprend en outre un circuit logique de protection, dans lequel la couche de protection est incorporée en tant qu'élément de liaison électrique et à travers laquelle transite un signal de commande autorisant la lecture des mémoires. Par conséquent, une rupture de la continuité de la couche de protection empêche toute transmission ultérieure du signal de commande, modifiant ainsi le signal de sortie du circuit logique de protection. Des moyens sont alors prévus pour interdire l'accès aux zones mémoires et donc aux données sensibles qui y sont stockées suite à l'atteinte physique portée à la couche de protection.

Cependant, un inconvénient important subsiste dans la solution qui vient d'être décrite en ce que certaines des techniques d'analyse les plus récentes telles que le FIB (Focused lon Beam) permettent de reconstituer une piste métallique du type existant sur les circuits intégrés. Ainsi, on peut imaginer qu'un pirate disposant d'une telle méthode d'analyse peut, dans un premier temps, supprimer une partie de la couche de protection décrite dans le brevet européen précité afin d'analyser la structure se trouvant en dessous. Ensuite, le pirate peut reconstituer la partie de la couche de protection précédemment supprimée pour refermer le circuit électrique du signal de commande, préférablement sur une région du circuit intégré distante de façon à laisser libres, pour une analyse ultérieure, les zones mémoires contenant les données sensibles. En outre, on peut noter que le pirate peut utiliser des dispositifs externes complémentaires, pour assurer la fermeture du circuit électrique du signal de commande après avoir retiré la couche de protection du circuit intégré, comme par exemple un simple fil conducteur.

Le but de la présente invention est de perfectionner les circuits intégrés de ce genre en améliorant les dispositifs de protection utilisés pour protéger les données sensibles qui y sont stockés, de telle manière qu'un pirate ne puisse pas y accéder, malgré les niveaux de performances élevés atteints par les techniques d'analyse les plus modernes.

Dans ce but, l'invention prévoit un circuit intégré du type indiqué plus haut, caractérisé par le fait que la surface de protection et le circuit de protection sont reliés par une connexion électrique, par le fait que des moyens sont prévus pour qu'une tentative de suppression, au moins partielle, de la surface de protection entraîne la modification définitive d'un paramètre électrique au niveau de la surface de protection ou du circuit de protection, indépendamment de l'état de fonctionnement de la source d'alimentation du circuit intégré, la détection de ladite modification définitive par le circuit de protection étant susceptible d'entraîner la mise en oeuvre des mesures de protection ou de destruction.

La surface de protection ne fait pas partie du circuit de protection en tant qu'élément de liaison, il n'est donc pas nécessaire de la sectionner complètement pour rendre la détection d'une tentative d'intrusion possible. En effet, avec les méthodes d'analyse ou d'attaque actuelles, tel que le FIB ou l'attaque par plasma, il est possible de retirer sélectivement une partie infime d'une telle surface de protection. Grâce à ses caractéristiques avantageuses, le circuit intégré selon la présente invention permet de détecter la moindre tentative d'intrusion par l'une des méthodes susmentionnées, ou toute autre méthode faisant appel à des moyens électriques ou électrostatiques. En outre, du fait de sa structure, le dispositif de protection selon la présente invention subit une modification définitive de l'un de ses paramètres électriques en réponse à une tentative d'intrusion, autrement dit une tentative de reconstruction après intrusion ne suffit pas à neutraliser la détection de l'intrusion.

Dans un premier mode de réalisation, le paramètre électrique utilisé pour mémoriser la tentative d'intrusion est la charge électrique. Dans ce but, on utilise des composants électroniques entre lesquels s'effectue un transfert de charges électriques suite à une attaque physique du type mentionné plus haut, notamment un transistor à grille flottante. Plusieurs variantes de réalisation seront décrites en détail plus loin, en relation avec les figures.

On prévoit également un second mode de réalisation, dans lequel le paramètre électrique utilisé pour mémoriser la tentative d'intrusion est la résistance électrique. Dans ce but, on utilise notamment au moins une résistance de valeur prédéfinie pour masquer des régions du circuit intégré dans lesquelles des données sensibles sont traitées et/ou stockées. Un pirate souhaitant accéder à ces données doit donc, au préalable, retirer au moins partiellement cette résistance. Il peut alors essayer de la reconstituer après avoir analysé l'architecture du circuit intégré, une reconstitution à l'identique étant particulièrement difficile. Ainsi, des moyens sont prévus pour comparer la valeur du potentiel d'une extrémité de cette résistance avec un potentiel de référence et détecter une éventuelle variation dans la limite de tolérances prédéfinies.

Dans une variante de ce mode de réalisation, on prévoit d'utiliser une pluralité de résistances associées les unes aux autres, disposées en une piste de conduction de forme complexe et refermée sur elle-même. Les différentes résistances sont obtenues par l'établissement de connexions électriques au circuit de protection en des points particuliers de la piste de conduction. Ces points de connexion sont choisis de telle manière que ces résistances électriques sont arrangées dans une configuration du type pont de Wheatstone, ce qui permet de détecter toute variation de la valeur de l'une par rapport à celles des autres à l'aide d'un circuit de type comparateur, par exemple. Les détails de réalisation seront exposés plus loin, en relation avec la description détaillée des figures.

L'invention sera mieux comprise à l'aide de la description suivante d'exemples d'exécution en référence aux dessins annexés dans lesquels:
- la figure 1a représente un schéma électrique simplifié du dispositif de protection selon un premier mode de réalisation de la présente invention;
- la figure 1b représente un schéma électrique simplifié d'une variante de réalisation du dispositif de protection représenté sur la figure 1a;
- la figure 2 représente un schéma électrique simplifié d'une variante de réalisation supplémentaire du dispositif de protection représenté sur les figures 1a et 1b;
- la figure 3a représente un schéma électrique simplifié du dispositif de protection selon une première variante d'un second mode de réalisation de la présente invention;
- la figure 3b représente l'allure générale de la caractéristique du circuit comparateur représenté sur la figure 3a;
- la figure 4a représente une vue en perspective d'un exemple de piste de conduction utilisée dans la première variante représentée sur la figure 3a;
- la figure 4b représente une vue de dessus d'un exemple de piste de conduction utilisée dans une variante préférée du second mode de réalisation, et
- la figure 5 représente un schéma électrique simplifié du dispositif de protection selon la variante préférée de la figure 4b.

Dans un premier mode de réalisation représenté sur la figure 1a, le dispositif électronique de protection d'une puce électronique, ou puce, selon la présente invention comporte une couche électriquement conductrice 1, préférablement disposée dans la partie supérieure de la puce, entre deux couches de protection, et de superficie au moins égale à celle de régions de la puce dans lesquelles des données sensibles sont traitées et/ou stockées. On peut évidemment réaliser la couche conductrice avec une superficie plus importante, éventuellement sensiblement égale à celle de la puce. Typiquement, cette couche conductrice 1 est réalisée en aluminium ou en cuivre et présente une épaisseur de l'ordre de quelques microns, les couches de protection étant des couches de passivation réalisées à base de nitrures. De telles couches conductrices sont couramment utilisées dans la fabrication des puces pour blinder les circuits électroniques de la puce contre des champs électromagnétiques externes ou contre des décharges électrostatiques. Le lecteur intéressé pourra notamment consulter le brevet européen EP 0 347 321 en ce qui concerne la fabrication d'une puce comportant une couche conductrice dans sa partie supérieure.

Bien entendu, la forme de la couche 1 représentée n'est pas limitative et l'homme du métier n'aura aucune difficulté pour l'adapter dans le but de mettre en oeuvre la présente invention dans des applications particulières.

Le dispositif de protection selon l'invention comporte également un circuit électronique, intégré dans la partie active de la puce et comprenant notamment une partie dédiée à la protection de la puce, auquel est connectée électriquement la couche conductrice. On a en effet schématisé, sur la figure 1a, une connexion électrique 2 réalisée à partir d'un point quelconque de la couche conductrice jusqu'à la grille de contrôle d'un premier transistor à grille flottante 3 faisant partie du circuit électronique de protection (seule la partie des circuits électroniques dédiée à la protection étant représentée).

Les deux autres bornes, source et drain, de ce premier transistor à grille flottante 3 sont reliées à une première borne d'un condensateur 4 et à la grille de contrôle d'un second transistor à grille flottante 5. La seconde borne du condensateur est reliée à une borne d'alimentation basse 6 de la puce, présentant un potentiel Vₛₛ. Les deux autres bornes, source et drain, du second transistor à grille flottante 5 sont reliées à une borne d'alimentation haute 7 de la puce, présentant un potentiel V_{DD}, et à la grille d'un transistor 8 supplémentaire, préférablement de type NMOS. Les deux autres bornes de ce transistor supplémentaire sont reliées à la borne d'alimentation basse 6 et à la borne d'alimentation haute 7 via un élément fusible 9. Un point 10 de connexion électrique est en outre prévu entre le transistor supplémentaire 8 et l'élément fusible 9 pour relier la borne d'alimentation haute 7 au reste des circuits électroniques de la puce, via l'élément fusible 9, pour assurer le fonctionnement de ces derniers.

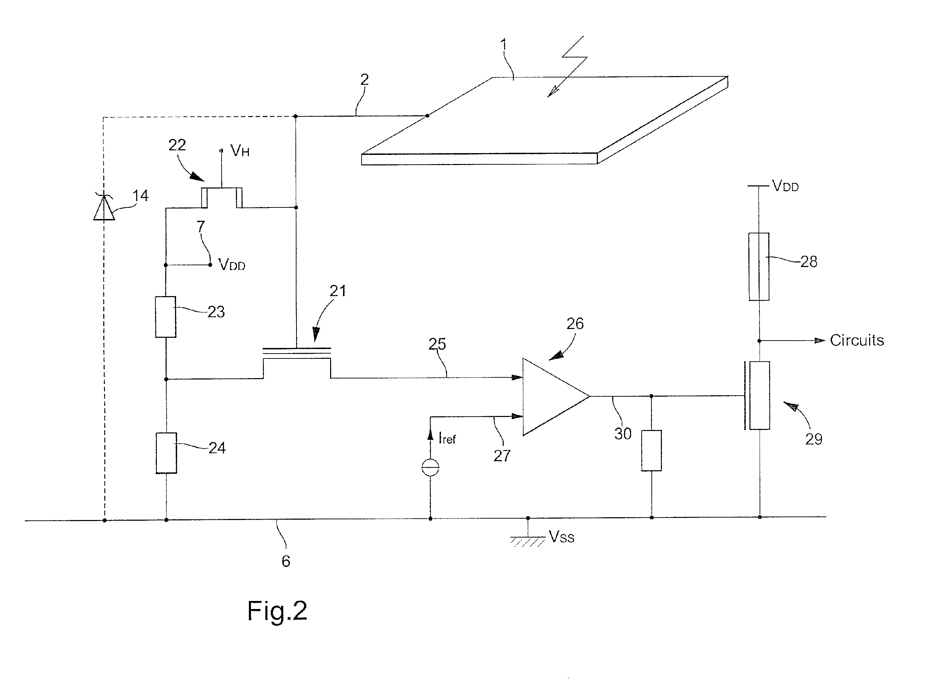

Initialement, c'est-à-dire en fin de fabrication, le condensateur 4 est chargé sous une tension de l'ordre de plusieurs Volts. De même, les deux transistors à grille flottante 3 et 5 étant pris de type à canal P pour des raisons exposées ci-dessous, en relation avec la description du fonctionnement du circuit de protection, leurs grilles sont initialement chargées positivement. En outre, l'état de l'élément fusible 9 est intact par défaut. On peut noter que les transistors utilisés sont préférablement du type couramment désigné cellule à grille divisée ou "split gate cell", dont le fonctionnement sera brièvement exposé plus loin, en relation avec la figure 2.

Avant d'aborder le fonctionnement du circuit de protection qui vient d'être décrit, il convient de noter que les méthodes d'analyse actuelles basées sur l'utilisation de faisceaux d'irradiation porteurs de charges électriques, qui sont détournées de leur fonction première par les pirates pour déterminer le mode de fonctionnement de puces électroniques, font quasi-exclusivement usage de charges positives. Ainsi, la plus fine de ces méthodes d'analyse actuelles, à savoir le FIB, est basée sur l'irradiation d'une surface par un faisceau constitué d'ions gallium, positifs.

Un pirate souhaitant analyser l'architecture ou le mode de fonctionnement de la puce électronique décrite ci-dessus à l'aide d'une méthode d'analyse du type FIB doit commencer par retirer au moins partiellement la couche conductrice 1 puisqu'elle recouvre au moins partiellement les circuits électroniques de la puce. Un afflux de charges positives sur la couche conductrice 1 entraîne un afflux de charges positives sur la grille de contrôle du premier transistor à grille flottante 3 via la connexion électrique 2. L'application d'un potentiel positif élevé sur la grille de contrôle du premier transistor 3 a pour effet de décharger la grille flottante, entraînant ainsi une augmentation de la hauteur du canal P et donc un abaissement des tensions de seuil de ce transistor 3.

Par conséquent, un potentiel étant appliqué de manière permanente sur le drain du premier transistor 3, du fait de la charge portée initialement par le condensateur 4, il devient passant entre sa source et son drain, indépendamment de l'état de fonctionnement de la source d'alimentation de la puce. De ce fait, le condensateur 4 se décharge, via le premier transistor 3, sur la grille de contrôle du second transistor à grille flottante 5. De même, l'afflux de charges positives sur ladite grille revient à porter cette dernière à un potentiel positif, ce qui entraîne un abaissement des tensions de seuil du second transistor à grille flottante 5, provoquant ainsi son passage d'un état bloqué à un état passant.

Dans le cas où la source d'alimentation de la puce n'est pas active, l'état du circuit de protection reste figé dans la configuration qui vient d'être décrite.

Ultérieurement, lorsque la source d'alimentation est activée, ou si elle l'était déjà au moment de la tentative d'analyse, le potentiel haut V_{DD} est appliqué, aux tensions de seuil du second transistor 5 près, à la grille du transistor NMOS 8 supplémentaire de façon à le rendre passant. Ainsi, les bornes de l'élément fusible 9 se trouvent brutalement portées, respectivement, au potentiel haut de la source d'alimentation V_{DD} et au potentiel bas de la source d'alimentation Vₛₛ, aux tensions de seuil du transistor NMOS 8 près. Par conséquent, cette situation revenant à court-circuiter les deux bornes 6 et 7 de la source d'alimentation au travers de l'élément fusible 9, un fort courant traverse ce dernier et entraîne sa rupture.

Comme on le constate sur la figure 1a, une fois que l'élément fusible 9 est coupé, la connexion électrique 10 reliée aux circuits électroniques de la puce se trouve déconnectée de la borne d'alimentation haute 7. Par conséquent, les circuits électroniques de la puce sont rendus hors d'usage et le pirate ne peut plus analyser leur fonctionnement. En outre, ce type de circuits électroniques comprend généralement des mémoires volatiles dont le contenu est effacé lorsque l'alimentation est interrompue, devenant inaccessible pour le pirate.

Le circuit de protection selon la présente invention entraîne donc une neutralisation des circuits électroniques de la puce de manière très efficace dès la moindre tentative de suppression, même partielle, de la couche conductrice 1 recouvrant lesdits circuits électroniques.

On peut signaler, en outre, que la réponse à la tentative d'attaque est définitive, dans la mesure où elle met en oeuvre des transferts de charges, a priori irréversibles. Ainsi, contrairement à la solution proposée par l'art antérieur décrit plus haut, la présente invention propose une solution dans laquelle une reconstitution de la couche conductrice après l'avoir modifiée est inefficace pour tenter de neutraliser le circuit de protection.

Par ailleurs, on peut bien entendu se prémunir des risques éventuels liés à une méthode d'analyse future faisant usage d'un faisceau de charges négatives par l'ajout, en parallèle du premier transistor à grille flottante 3, d'un troisième transistor à grille flottante 11, tel que représenté sur la figure 1a en pointillés. Dans ce cas, la polarité du troisième transistor 11 est l'opposée de celle du premier transistor 3, donc ici, de type N. Le drain et la source de ce troisième transistor 11 sont respectivement reliés à la source et au drain du premier transistor 3, tandis que sa grille de contrôle est également reliée à la couche conductrice 1. En outre, à l'état initial, la grille flottante du troisième transistor 11 est chargée négativement.

Bien entendu, l'homme du métier pourra choisir de mettre en oeuvre la présente alternative si l'intégration du transistor supplémentaire est compatible avec le procédé de fabrication de la puce électronique concernée ou n'exige pas d'efforts trop importants.

En ce qui concerne le fonctionnement du circuit selon cette alternative de réalisation, il est inchangé dans le cas d'une attaque sur la couche conductrice basée sur l'utilisation de charges positives. Dans le cas d'une attaque basée sur l'utilisation de charges négatives, le troisième transistor à grille flottante 11 réagit de manière symétrique par rapport à la réaction du premier transistor 3 décrite précédemment. En effet, l'afflux de charges négatives sur la grille de contrôle du troisième transistor 11 a pour conséquence de le rendre passant, autorisant ainsi la décharge du condensateur 4 sur la grille de contrôle du second transistor à grille flottante 5, la suite du fonctionnement étant identique à ce qui a été décrit plus haut.

On peut noter que pour le premier (et pour le troisième 11) transistor 3, on peut simplement utiliser un transistor MOS conventionnel à la place d'un transistor à grille flottante, toutefois ce dernier type de transistor procure en plus une protection des circuits électroniques de la puce contre les décharges électrostatiques ou ESD pouvant survenir sur la couche conductrice 1.

Bien entendu, le fonctionnement du circuit de protection selon la présente invention ne se limite pas à ce qui vient d'être décrit, notamment en ce qui concerne les conséquences de la tentative d'intrusion sur les circuits électroniques de la puce. En effet, on peut prévoir une action différente de la coupure de la ligne d'alimentation des circuits électroniques comme, par exemple, l'envoi d'un courant important dans les circuits électroniques pour y créer des dommages irréversibles.

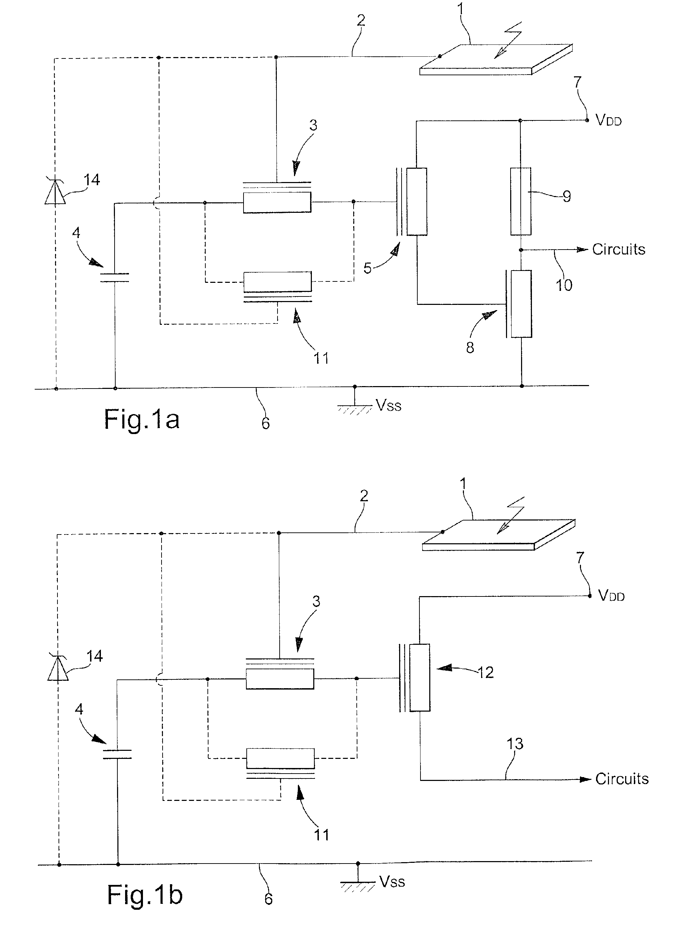

Dans l'optique de simplement couper la ligne d'alimentation des circuits électroniques de la puce, on peut mettre en oeuvre la variante suivante, représentée sur la figure 1b et décrite à titre d'exemple non limitatif. Dans un but de simplification du circuit électronique de protection, on peut prévoir de se passer de l'élément fusible 9 et du transistor NMOS supplémentaire 8, en remplaçant le second transistor à grille flottante 5 de type P par un transistor à grille flottante 12 de type N. Dans ce cas, le drain et la source de ce transistor N 12 sont reliés respectivement à la borne d'alimentation haute 7 portée au potentiel V_{DD} et directement à la ligne d'alimentation 13 des circuits électroniques de la puce. En outre, la grille flottante de ce transistor 12 est initialement dans un état déchargé. Dans cet état, le transistor 12 est passant et autorise l'alimentation électrique desdits circuits électroniques.

En cas d'attaque électrique de la couche conductrice 1, le condensateur 4 se décharge sur la grille de contrôle du transistor 3, entraînant l'accumulation d'une charge négative sur sa grille flottante ayant pour conséquence d'augmenter ses tensions de seuil et de le faire passer dans l'état bloqué. A partir de ce moment, la ligne d'alimentation 13 des circuits électroniques de la puce est interrompue et les circuits électroniques ne peuvent donc plus fonctionner.

On a représenté en outre en traits pointillés sur les figures 1a et 1b une diode Zéner 14 connectée entre la connexion électrique 2 et la borne basse 6 de la source d'alimentation de la puce. La fonction de cette diode 14, conventionnelle pour ce type de puce électronique, est d'assurer une protection des circuits électroniques contre les surtensions.

La figure 2 présente une variante possible de ce premier mode de réalisation, faisant appel à une cellule mémoire non volatile de type conventionnel.

La cellule mémoire comporte un transistor à grille flottante 21 dont le drain est connecté à une source de tension et dont la grille de contrôle est connectée simultanément à la couche de protection 1, via la connexion électrique 2, et à la source d'un transistor 22 à haut voltage. La source de tension peut éventuellement être réalisée sous la forme d'un pont de division de tension, de type résistif par exemple, connecté entre les bornes haute 7 et basse 6 de la source d'alimentation de la puce. Dans ce cas, le drain du transistor à grille flottante 21 est relié à un noeud situé entre deux résistances 23 et 24 de manière à fixer le potentiel du drain à une valeur de l'ordre du Volt.

La source du transistor à grille flottante 21 est connectée à une première entrée 25 d'un comparateur de courant 26 recevant un courant de référence sur sa deuxième entrée 27.

En fonction du type de transistor à grille flottante utilisé et de la réponse du dispositif de protection souhaitée, le fonctionnement du comparateur de courant 26 doit être adapté. En effet, on peut mettre en oeuvre l'exemple de réalisation représenté sur la figure 1a, c'est-à-dire associer un élément fusible 28 à un transistor 29 de type NMOS, si on souhaite seulement que la puce soit désactivée en réponse à une attaque. Dans ce cas, le comparateur de courant 26 doit être réalisé de telle manière qu'il délivre sur sa sortie 30 un signal de potentiel sensiblement nul dans l'état initial et un signal de potentiel suffisamment élevé pour rendre le transistor NMOS passant suite à une attaque, par exemple de potentiel sensiblement égal à V_{DD}. Inversement, on peut prévoir un circuit de réponse différent, nécessitant que le comparateur de courant 26 délivre en sortie un signal de potentiel élevé dans l'état initial et un signal de potentiel sensiblement nul suite à une attaque.

D'autre part, le fonctionnement du comparateur de courant 26 doit être adapté au type de transistor à grille flottante retenu. En effet, on distingue principalement deux types de transistors dans le domaine des mémoires reprogrammables, les transistors du type "split gate", ou à grille divisée, et les transistors du type "stacked gate", ou à grilles superposées. Ces deux types de transistors ont des fonctionnements respectifs opposés.

Ainsi, dans le cas d'un split-gate transistor, l'état initial est un état programmé dans lequel le courant de drain est sensiblement nul, tandis qu'une attaque, par exemple par FIB, a pour effet "d'effacer" le transistor entraînant l'apparition d'un courant de drain lorsque le transistor est sélectionné, autrement dit polarisé de manière adéquate.

Inversement, dans le cas d'un stacked-gate transistor, ou d'une "stacked gate cell" de manière plus générale, l'état initial est un état effacé dans lequel un courant de drain est sensible lorsque le transistor est sélectionné, tandis qu'une attaque par FIB a pour effet de faire passer le transistor dans un état programmé, dans lequel le courant de drain est quasiment nul.

De manière préférée, ces cellules mémoires sont initialisées lors des étapes de test effectuées en fin de fabrication de la puce électronique, permettant ainsi l'activation du dispositif de protection selon la présente invention.

Ces moyens étant connus dans le domaine des mémoires reprogrammables ainsi que leurs modes de programmation, l'homme du métier pourra se reporter à la littérature correspondante pour trouver les informations nécessaires à la mise au point d'un circuit adapté à ses besoins.

Bien entendu, on peut en outre prévoir des moyens conventionnels différents pour détruire les circuits électroniques de la puce si on souhaite une réponse irréversible du circuit de protection selon l'invention, comme mentionné plus haut. En particulier, on peut prévoir des alternatives à l'utilisation d'un comparateur de courant par exemple.

Par ailleurs, on peut noter qu'il est possible de modifier l'état de telles cellules mémoire du type à transistor à grille flottante en leur faisant subir un chauffage prolongé à une température de l'ordre de quelques centaines de degrés celsius. Il faudrait toutefois appliquer ce chauffage pendant une durée de l'ordre de plusieurs mois pour parvenir à modifier complètement l'état d'une cellule de ce type. On peut prévoir, malgré l'importance de cette durée, des moyens complémentaires de protection visant à la détection d'une tentative de neutralisation du circuit de protection par chauffage.

Dans ce but, on peut ajouter un sous-circuit supplémentaire (non représenté), similaire au circuit représenté sur la figure 2, comprenant un transistor à grille flottante du même type que le transistor 21 commandé par un transistor de sélection à haut voltage et dont la source est connectée à l'entrée d'un comparateur de courant, recevant sur une seconde entrée un courant de référence. Toutefois, la grille de contrôle de ce transistor supplémentaire n'est pas reliée à la couche de protection 1, contrairement à celle du transistor 21. En outre, la sortie du comparateur de courant est connectée sur la grille du transistor 29. Ce sous-circuit doit être réalisé de telle manière qu'à l'état initial le comparateur de courant délivre en sortie un signal nul, tandis qu'il délivre un signal de niveau haut après que la puce ait été soumise à une tentative de piratage par chauffage. Ainsi, suite à un chauffage, l'élément fusible 28 est court-circuité du fait du changement d'état du transistor 29 et, la connexion de la borne d'alimentation vers les circuits électroniques de la puce est interrompue.

On peut noter, de même que dans les deux premières variantes de réalisation, la présence d'une diode Zéner 14 assurant une protection des circuits électroniques contre les surtensions. En outre, dans le cas du circuit représenté sur la figure 2, la diode 14 assure avantageusement une seconde fonction consistant à empêcher la modification de l'état du transistor 21 depuis l'extérieur par application d'un potentiel électrique élevé.

On peut également noter qu'une alternative possible au circuit représenté sur la figure 2 consisterait à connecter la couche de protection 1 directement sur la grille flottante du transistor 21, via la connexion électrique 2. Ainsi, l'état du transistor 21 peut également être modifié en cas de tentative d'attaque par FIB. Toutefois, une telle solution procure un niveau de sécurité moindre que le circuit de la figure 2, dans la mesure où le pirate a la possibilité d'accéder directement à l'état du transistor 21 à partir de la couche de protection 1, dans le but de la modifier.

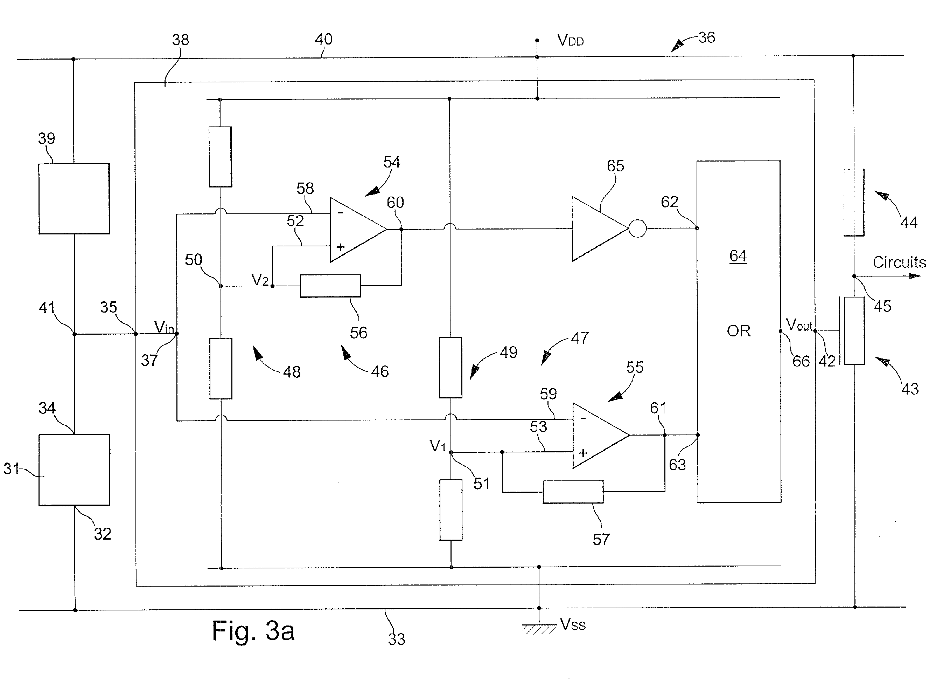

Un deuxième mode de réalisation du dispositif de protection selon la présente invention est schématisé sur la figure 3a. Le principe général de ce second mode de réalisation consiste à comparer un paramètre électrique d'un élément de protection avec une grandeur de référence.

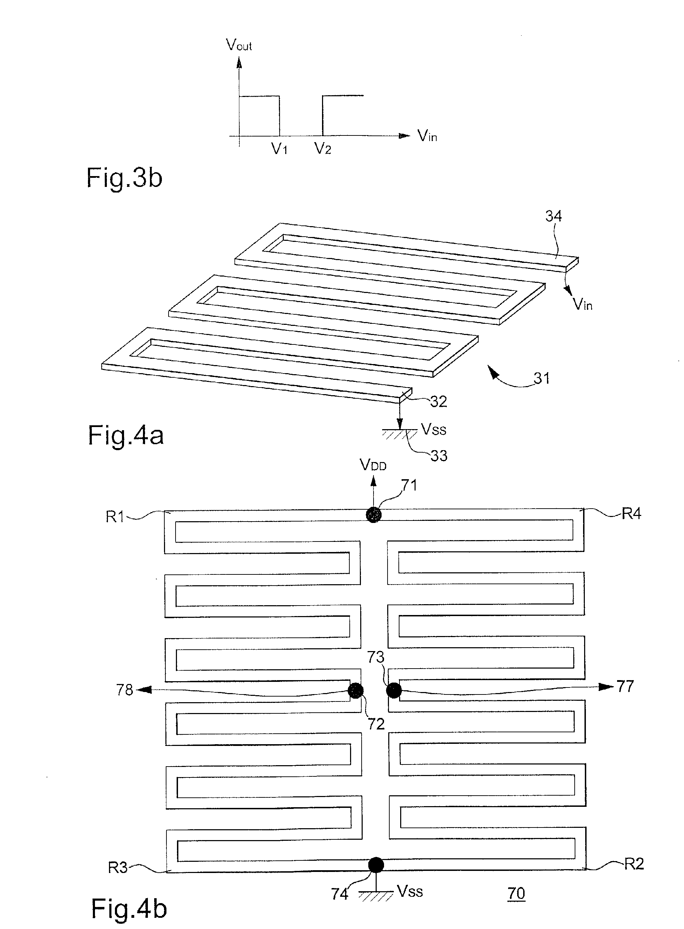

Pour être plus précis, on considère, par exemple et dans une variante préférée, que l'élément de protection est une résistance 31 réalisée sous la forme de méandres, tel que représenté sur la figure 4a. II est bien entendu prévu que la résistance 31 recouvre au moins partiellement des régions des circuits électroniques de la puce dans lesquelles des données sensibles sont traitées et/ou stockées. Une première extrémité 32 de cette résistance est connectée à la borne basse 33 de la source d'alimentation de la puce présentant un potentiel Vₛₛ, autrement dit plus généralement, la masse, tandis que l'autre extrémité 34 de la résistance 31 est connectée à la borne d'entrée 35 d'un circuit électronique de protection 36 (figure 3a). On en déduit que le circuit électronique de protection 36 reçoit, en entrée, un signal représentatif du potentiel de la seconde extrémité 34 de la résistance 31.

La borne d'entrée 35 du circuit électronique de protection est reliée à la fois à une entrée 37 d'un circuit comparateur 38 et à une première borne d'une seconde résistance 39. La seconde borne de la seconde résistance 39 est reliée à la borne haute 40 de la source d'alimentation de la puce présentant un potentiel V_{DD}.

On constate, sur la figure 3a, que l'agencement des deux résistances 31 et 39 constitue un pont de division de tension, dont le potentiel du point milieu 41 est amené à la borne d'entrée 37 du circuit comparateur 38.

Le circuit comparateur 38 comporte une borne de sortie 42 reliée à la grille d'un transistor 43, de type NMOS par exemple, dont la source est connectée à la borne basse 33 de la source d'alimentation de la puce, le drain étant connecté à la borne haute 40 de la source d'alimentation, au travers d'un élément fusible 44. Un point de connexion électrique 45 est en outre prévu entre le transistor 43 et l'élément fusible 44 pour relier la borne d'alimentation haute au reste des circuits électroniques de la puce, via l'élément fusible 44, pour en permettre le fonctionnement.

Le principe de fonctionnement du circuit de protection 36 décrit ci-dessus est basé sur la détection d'une variation de la valeur de la résistance de protection 31, cette variation étant la conséquence d'une attaque pirate. En effet, pour accéder aux informations sensibles contenues dans la puce, un pirate doit commencer par retirer au moins partiellement la résistance de protection 31 avant de pouvoir accéder aux régions actives. incidemment, la valeur de cette résistance est modifiée, et ce, même dans le cas où le pirate anticiperait la rupture d'un éventuel circuit électrique visant à détecter son attaque et prévoirait de reconstituer la résistance de protection 31, dans une forme légèrement différente de manière à laisser accessibles des régions actives de la puce présentant un intérêt pour lui.

La modification de la valeur de la résistance de protection est alors détectée par le circuit comparateur 38, lorsqu'il est alimenté, ce dernier recevant un signal d'entrée modifié. On prévoit que les valeurs respectives des deux résistances 31 et 39 mises en jeu et que la structure du circuit comparateur 38 sont initialement choisies de telle manière que le circuit comparateur délivre, avant l'attaque, un signal de sortie présentant un niveau sensiblement nul. On prévoit d'autre part que, suite à une modification du signal reçu en entrée, le circuit comparateur 38 délivre un signal de sortie présentant un niveau haut. En outre, le transistor NMOS 43 dont la grille est reliée à la sortie 42 du circuit comparateur 38 est initialement dans un état bloqué et devient passant en réponse à un signal de niveau haut en sortie du circuit comparateur.

Dans le cas où la source d'alimentation de la puce n'est pas active, l'état du circuit de protection 36 reste stable dans la configuration qui vient d'être décrite.

Ultérieurement, lorsque la source d'alimentation est activée, ou si elle l'était déjà au moment de la tentative d'analyse, le circuit comparateur 38 délivre un signal de sortie présentant un niveau haut, représentatif du fait qu'une attaque a été portée sur la résistance de protection 31. Par conséquent, le transistor 43 devient passant et les bornes de l'élément fusible 44 se trouvent brutalement portées, respectivement, au potentiel haut de la source d'alimentation V_{DD} et au potentiel bas de la source d'alimentation Vₛₛ, aux tensions de seuil du transistor 43 près. Par conséquent, cette situation revenant à court-circuiter les deux bornes 33 et 40 de la source d'alimentation au travers de l'élément fusible 44, un fort courant traverse ce dernier, entraînant sa rupture.

Comme on le constate sur la figure 3a, une fois que l'élément fusible 44 est coupé, la connexion électrique 45 reliée aux circuits électroniques de la puce se trouve déconnectée de la borne d'alimentation haute 40. Par conséquent, les circuits électroniques de la puce sont rendus hors d'usage et le pirate ne peut plus analyser leur fonctionnement.

De même que pour le premier mode de réalisation, le fonctionnement du circuit de protection 36 selon le second mode de réalisation ne se limite pas à ce qui vient d'être décrit, notamment en ce qui concerne les conséquences de la tentative d'intrusion sur les circuits électroniques de la puce. En effet, on peut également prévoir une action différente de la coupure de la ligne d'alimentation des circuits électroniques comme, par exemple, l'envoi d'un courant important dans les circuits électroniques pour y créer des dommages irréversibles.

On a représenté à titre d'exemple non limitatif, sur la figure 3a, une structure possible pour la réalisation du circuit comparateur 38 décrit précédemment. On constate la présence de deux sous-circuits 46 et 47 similaires connectés tous deux sur la borne d'entrée 37 du circuit comparateur 38 présentant un potentiel d'entrée Vᵢₙ. Chacun de ces sous-circuits 46, 47 comprend un pont de division de tension de type résistif 48, 49 connecté entre les bornes d'alimentation haute 40 et basse 33 de la source d'alimentation de la puce et, permettant de définir, à partir de son point milieu 50, 51, le potentiel V₁, respectivement V₂, d'une première borne d'entrée 52, respectivement 53, positive d'un amplificateur 54, respectivement 55, utilisé comme comparateur conventionnel. Chacun des amplificateurs 54, 55 présente une connexion du type contre-réaction positive, via une résistance 56, respectivement 57, tandis que sa borne d'entrée négative 58, respectivement 59, est reliée à la borne d'entrée 37 du circuit comparateur. Les sorties respectives 60 et 61 des deux amplificateurs 54, 55 sont reliées à deux entrées 62 et 63 d'une porte logique OU 64, l'une des deux sorties 60 étant préalablement reliée à un inverseur logique 65. La sortie 66 de la porte logique OU est connectée à la sortie du circuit comparateur 42 qui présente un potentiel noté V_{out.}

On a représenté sur la figure 3b l'allure générale du comportement du circuit comparateur, autrement dit, la valeur du potentiel de sortie 42 du circuit comparateur Vₒᵤₜ en fonction du potentiel d'entrée 37 Vᵢₙ, c'est-à-dire en fonction du potentiel de la seconde extrémité 34 de la résistance de protection 31.

On constate que du fait de sa structure particulière, le circuit comparateur 38 délivre un signal de sortie sensiblement nul avant la tentative d'intrusion et la puce fonctionne normalement, tandis qu'une variation de la valeur de la résistance de protection 31 dans un sens ou dans l'autre, et dans une certaine mesure en fonction des caractéristiques techniques du circuit comparateur 38, entraîne la production d'un signal de sortie de niveau haut ayant pour conséquence la désactivation de la puce.

En effet, en réponse à une variation de la valeur de la résistance de protection 31 consécutive à une modification, l'un ou l'autre des deux sous-circuits 46, 47 délivre un signal de sortie de niveau haut, en fonction du sens de variation de la valeur de la résistance 31, ce signal étant délivré sur la grille du transistor NMOS 43 qui devient passant, de manière à court-circuiter l'élément fusible 44 et à couper l'alimentation 45 des circuits électroniques de la puce.

En pratique, les résistances utilisées dans le circuit comparateur 38 sont choisies de telle manière que V₂ est légèrement plus grand que V₁, les valeurs respectives de ces deux potentiels étant ajustées de façon à encadrer la valeur initiale du potentiel d'entrée Vᵢₙ en tenant compte des tolérances de fabrication inhérentes à l'intégration des différentes résistances. Bien entendu, ce choix dépend également de la sensibilité souhaitée pour le dispositif de protection de la puce électronique.

L'homme du métier ne rencontrera aucune difficulté particulière pour mettre en oeuvre des moyens différents permettant d'assurer les mêmes fonctions sans sortir du cadre de la présente invention.

A titre d'exemple, on peut noter que la mise en oeuvre du circuit de protection 36 qui vient d'être décrit est possible en utilisant un principe (non représenté, la figure 3a restant valable pour cette variante) basé sur la variation de la capacité d'un condensateur de protection par rapport à la capacité d'un condensateur de référence. De cette façon, on remplace simplement le pont diviseur de tension résistif 31, 39 précédemment décrit par un pont diviseur de tension de type capacitif.

En pratique, pour réaliser le condensateur de protection, on peut simplement utiliser une couche de protection double, en se basant sur le principe décrit en relation avec le premier mode de réalisation. Une première couche conductrice (métallique) peut-être déposée sur une couche de passivation recouvrant directement ou indirectement les pistes de métallisation de la puce, de la même manière que pour la couche conductrice 1 du premier mode de réalisation. On recouvre alors cette première couche conductrice d'une couche de matériau diélectrique, cette dernière pouvant être éventuellement une couche de passivation conventionnelle, avant de déposer une seconde couche conductrice sensiblement de même superficie que la première, préférablement, mais de manière non impérative. Ces deux couches conductrices en regard l'une de l'autre constituent ainsi un condensateur.

Des connexions électriques sont en outre prévues pour connecter l'une des couches à une borne basse 33 de la source d'alimentation de la puce et l'autre couche à l'entrée du circuit de protection 35, soit à l'entrée 37 du (circuit) comparateur 38. De manière analogue à la première variante du second mode de réalisation, un condensateur de référence est connecté entre la borne d'entrée 37 du comparateur et une borne haute 40 de la source d'alimentation de la puce.

Le fonctionnement de cette variante avec pont diviseur de tension de type capacitif est identique à celui de la variante précédente. En effet, une atteinte physique, incontournable pour pirater la puce électronique, portée au moins sur la couche conductrice supérieure (dans un premier temps) modifie inévitablement la capacité du condensateur de protection. Cette modification est alors détectée par le circuit comparateur 38 lorsque les circuits de la puce sont alimentés, et l'élément fusible 44 est coupé de façon à empêcher l'alimentation des circuits électroniques de la puce.

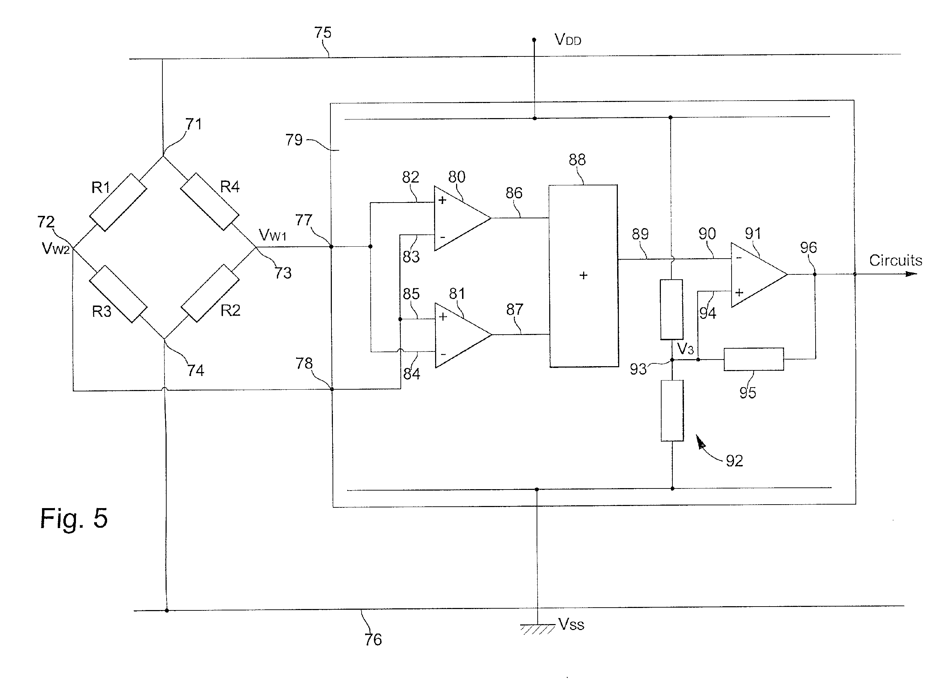

Une variante préférée du second mode de réalisation est représentée sur la figure 5, cette variante étant basée sur une mesure différentielle. La différence essentielle avec ce qui précède se situe au niveau de la structure utilisée pour effectuer la détection de l'attaque, le principe restant basé sur la détection de la variation de la valeur d'une résistance.

Dans ce but, on utilise une structure en pont de Wheatstone comportant quatre résistances. En pratique et de manière préférée, les quatre résistances sont réalisées d'une seule pièce, comme cela est apparent de la figure 4b.

La résistance 70 représentée sur la figure 4b est du même type que celle décrite en relation avec la figure 4a. Elle est réalisée en une piste de conduction électrique sous la forme de méandres, préférablement métallique, et fermée sur elle-même. Quatre points de connexion électrique 71 à 74 sont prévus sur la piste conductrice de manière à délimiter les quatre résistances R₁ à R₄ constituant le pont de Wheatstone et établir les connexions électriques, d'une part, avec une borne haute 75 portée au potentiel V_{DD} et une borne basse 76 portée au potentiel Vₛₛ de la source d'alimentation de la puce et, d'autre part, avec les deux bornes d'entrée 77 et 78 d'un circuit comparateur 79.

initialement, les valeurs respectives des résistances de protection R₁ à R₄ constituées au niveau de la piste conductrice sont choisies de telle manière que le pont de Wheatstone est équilibré, c'est-à-dire que la différence de potentiel entre les points de connexion 72 et 73 est nulle. Dans ce but, la piste conductrice et les points de connexion sont réalisés de sorte que R₁R₂=R₃R₄.

Au cours d'une tentative d'intrusion, la piste conductrice subit une modification physique qui entraîne la modification de la valeur d'au moins une des quatre résistances de protection R₁ à R₄. Par conséquent, la probabilité pour que la condition d'équilibre du pont de Wheatstone ne soit plus remplie devient très grande après une attaque. Dans ce cas, une différence de potentiel apparaît entre les bornes d'entrée 77 et 78 du circuit comparateur 79, ceci entraînant la rupture de l'élément fusible conformément à ce qui a été expliqué plus haut.

De même que dans le cadre de la première variante de ce second mode de réalisation, on a représenté sur la figure 5 un exemple de réalisation non limitatif du circuit comparateur 79 qui peut être employé pour détecter l'attaque.

On note respectivement V_{W1} et V_{W2} les potentiels respectifs des deux points milieux 73 et 72 du pont de Wheatstone qui sont respectivement connectés aux deux bornes d'entrée 77 et 78 du circuit comparateur 79. Ce dernier comporte un premier 80 et un second 81 amplificateurs linéaires conventionnels en entrée, tous deux alimentés entre V_{DD} et Vₛₛ et présentant des facteurs d'amplification respectifs du même ordre de grandeur. Les bornes d'entrée 82, 83 du premier amplificateur 80 sont respectivement connectées à la borne d'entrée 77 pour la borne positive et à la borne d'entrée 78 pour la borne négative. D'autre part, les bornes d'entrée 84, 85 du second amplificateur 81 sont respectivement connectées à la borne d'entrée 77 pour la borne négative et à la borne d'entrée 78 pour la borne positive, donc en opposition par rapport au premier amplificateur 80.

Ainsi, le premier et le second amplificateurs linéaires amplifient respectivement les différences de potentiels V_{W1}-V_{W2} et V_{W2}-V_{W1}, pour délivrer en sortie soit un signal sensiblement nul, soit un signal de niveau haut. En effet, si la différence de potentiel V_{W1}-V_{W2} est nulle, avec toutefois une certaine tolérance définie à la fois par les conditions de fabrication et la sensibilité souhaitée pour le dispositif de protection, le premier 80 et le second 81 amplificateurs délivrent en sortie 86, respectivement 87, des signaux respectifs sensiblement nuls. Cette situation correspondant à un équilibre du pont de Wheatstone est donc l'état dans lequel se trouve la puce avant une attaque.

Suite à une attaque, la résistance de protection 70 est modifiée, ce qui entraîne la modification de la valeur d'au moins une des résistances R₁ à R₄ et un très probable déséquilibre du pont de Wheatstone. La différence de potentiel entre les deux entrées 77 et 78 du circuit comparateur 79 prend par conséquent une valeur non nulle. Dans un tel cas de figure, l'un des deux amplificateurs 80 ou 81 délivre en sortie un signal de niveau haut tandis que l'autre amplificateur 81 ou 80 délivre un signal nul, et inversement en fonction du signe de la différence de potentiel, ce dernier dépendant des variations relatives des résistances R₁ à R₄.

Les sorties 86 et 87 des deux amplificateurs sont respectivement reliées à deux entrées d'un circuit sommateur analogique 88 de type conventionnel qui délivre en sortie un signal proportionnel à la valeur absolue de la différence de potentiel V_{W2}-V_{W1}.

La borne de sortie 89 du circuit sommateur est reliée à la borne d'entrée négative 90 d'un amplificateur 91 utilisé comme comparateur conventionnel. Un pont de division de tension de type résistif 92 est connecté entre les bornes haute 75 et basse 76 de la source d'alimentation de la puce et permet de définir, à partir de son point milieu 93, un potentiel de référence V₃ pour l'entrée positive 94 de l'amplificateur 91. L'amplificateur comporte en outre une boucle de contre-réaction positive effectuée par le biais d'une résistance 95. Le fonctionnement de cet amplificateur 91 est similaire à celui des amplificateurs décrits en relation avec la première variante du présent mode de réalisation et ne sera donc pas décrit en détail.

La sortie 96 de l'amplificateur 91 constitue la sortie du circuit comparateur qui délivre en sortie un signal de niveau haut dans son état initial et un signal nul lorsque la résistance de protection 70 a subi une modification. On peut alors prévoir divers types de circuits reliés à la sortie du circuit comparateur 79 en fonction de la mesure de protection souhaitée.

On peut noter que, de manière avantageuse, les amplificateurs 54, 55 et 91 utilisés comme comparateurs conventionnels dans ce second mode de réalisation peuvent être choisis du type à hystérésis, pour éviter une instabilité du circuit de protection au voisinage des valeurs limites pour les potentiels d'entrées.

Comme on vient de le voir, le dispositif de protection pour puce électronique selon la présente invention permet avantageusement de détecter une tentative d'intrusion dans les circuits électroniques de la puce, avec une "mise en mémoire" de cet événement, dans le cas où la puce n'est pas alimentée au moment de l'attaque, pour fournir une réponse adaptée quel que soit l'état de fonctionnement de la puce au moment de l'attaque. En outre, le dispositif de protection utilise de manière avantageuse des composants conventionnels permettant de lui assurer une apparence discrète.

Bien entendu, les structures qui viennent d'être décrites respectivement dans le premier et dans le second modes de réalisation présentent une protection encore plus efficace lorsqu'on les combine ensemble. Ainsi, on peut prévoir une piste de métallisation formant des résistances conformées en pont de Wheatstone sur le dessus des régions actives de la puce, en particulier au-dessus du circuit de protection, et prévoir en outre une couche conductrice recouvrant le tout, cette dernière étant connectée au même circuit de protection ou éventuellement à un circuit de protection supplémentaire.

En particulier, on peut noter qu'une technique d'analyse récente et coûteuse, dérivée du FIB, permet d'effectuer l'analyse de circuits électroniques à la manière du FIB sans recours à des entités chargées. Toutefois, cette méthode est limitée pour l'instant à l'attaque de couches conductrices superficielles et ne permet pas de supprimer des couches de protection conductrices enterrées. Ainsi, une combinaison avantageuse des techniques de protection qui viennent d'être décrites consiste à placer, depuis la surface supérieure de la puce vers ses régions actives, au moins deux couches comportant chacune une résistance du type de celles représentées sur les figures 4a et 4b et connectées à au moins un premier circuit de protection et, une couche de protection recouvrant au moins les régions contenant des données sensibles de la puce et connectée à un second circuit de protection. La seconde couche comportant une résistance étant enterrée ne peut faire l'objet d'une attaque par "FIB non chargé", tandis que les deux autres couches assurent une protection tel que décrit plus haut. Bien entendu, ces différentes couches sont séparées les unes des autres par des couches intermédiaires isolantes de type conventionnel.

L'homme du métier pourra adapter une combinaison de ce type à ses propres besoins sans sortir du cadre de la présente invention, en particulier on peut préférablement tirer profit des étapes inhérentes au procédé de fabrication de la puce pour réaliser les couches et circuits de protection selon l'invention.

## Revendications

1. Circuit intégré électronique comprenant un substrat semi-conducteur surmonté d'une couche active dans laquelle sont notamment intégrés des composants électroniques et comportant au moins une région dans laquelle des données sensibles sont traitées et/ou stockées, au moins une couche de passivation surmontant la couche active, et au moins une surface de protection (1, 31, 70) réalisée en un matériau électriquement conducteur disposée à un niveau supérieur à celui de la couche active et recouvrant au moins ladite région de la couche active dans laquelle les données sensibles sont traitées et/ou stockées, la couche active comportant en outre un circuit de protection (36) comprenant des moyens pour mettre en oeuvre des mesures de protection ou de destruction de ladite région dans laquelle les données sensibles sont traitées et/ou stockées en cas de tentative de suppression de la surface de protection, ledit circuit de protection étant relié au moins indirectement à ladite région dans laquelle les données sensibles sont traitées et/ou stockées, **caractérisé en ce que** la surface de protection (1, 31, 70) et le circuit de protection sont reliés par une connexion électrique (2), **en ce que** des moyens sont prévus pour qu'une tentative de suppression, au moins partielle, de la surface de protection (1, 31, 70) entraîne la modification définitive d'un paramètre électrique au niveau de la surface de protection (1, 31, 70) ou du circuit de protection, indépendamment de l'état de fonctionnement de la source d'alimentation du circuit intégré, la détection de ladite modification définitive par le circuit de protection étant susceptible d'entraîner la mise en oeuvre desdites mesures de protection ou de destruction.

2. Circuit intégré selon la revendication 1, **caractérisé en ce que** le circuit de protection est susceptible de détecter une modification de la charge électrique portée par la surface de protection (1).

3. Circuit intégré selon la revendication 2, **caractérisé en ce que** le circuit de protection comprend un composant électronique (3, 21), dont une première borne est connectée électriquement à la surface de protection (1), susceptible de passer d'un premier état à un second état suite à la modification de la charge électrique portée par ladite surface de protection (1).

4. Circuit intégré selon la revendication 3, **caractérisé en ce que** ledit composant électronique est un premier transistor à grille flottante (3, 21), comportant notamment une grille formant ladite première borne connectée à la surface de protection (1), le transistor (3, 21) étant susceptible de passer d'un premier état bloqué à un second état passant suite à la modification de la charge électrique portée par sa grille flottante.

5. Circuit intégré selon la revendication 4, **caractérisé en ce que** ledit premier transistor à grille flottante (3, 21) présente un canal obtenu par l'implantation d'un dopant d'un premier type et est connecté à la surface de protection (1) par sa grille de contrôle, le circuit de protection comportant un second transistor à grille flottante (11) dont le canal est obtenu par l'implantation d'un dopant de type opposé au premier type et dont la grille de contrôle est également connectée à la surface de protection (1), la source et le drain d'un transistor étant respectivement connectés à la source et au drain de l'autre transistor (3).

6. Circuit intégré selon l'une des revendications 3 à 5, **caractérisé en ce que** le circuit de protection comporte en outre un condensateur (4) dont l'une des bornes est connectée à une seconde borne du composant électronique (3, 11), le condensateur étant chargé électriquement en cours de fabrication et le restant jusqu'au passage dudit composant électronique (3, 11) dans son second état.

7. Circuit intégré selon les revendications 4 et 6, **caractérisé en ce que** le circuit de protection comprend un transistor à grille flottante (5) supplémentaire comportant notamment une première borne, à savoir une grille de contrôle, connectée à une troisième borne du premier transistor à grille flottante (3), ladite grille étant susceptible de se charger lors de la décharge du condensateur (4).

8. Circuit intégré selon la revendication 7, **caractérisé en ce que** le circuit de protection comporte en outre une borne d'alimentation haute (7) reliée à la source d'alimentation du circuit intégré, une masse (6) et une borne de sortie (10) reliée au moins indirectement à la région de la couche active dans laquelle les données sensibles sont traitées et/ou stockées, le circuit de protection comportant en outre un élément fusible (9) et un transistor (8), une seconde borne du transistor à grille flottante (5) étant connectée à la borne d'alimentation haute (7) tandis que sa troisième borne est connectée à la grille dudit transistor (8), dont les deux autres bornes sont respectivement connectées à la masse (6) et à la borne de sortie (10) du circuit de protection, l'élément fusible (9) étant connecté entre la borne d'alimentation haute (7) et la borne de sortie (10) du circuit de protection, le transistor à grille flottante supplémentaire (5) étant réalisé de telle manière qu'il se trouve initialement dans un état bloqué et qu'une augmentation de son potentiel de grille de contrôle le rend passant.

9. Circuit intégré selon la revendication 7, **caractérisé en ce que** le transistor à grille flottante supplémentaire (12) comporte une seconde borne connectée à une borne d'alimentation haute (7) reliée à la source d'alimentation du circuit intégré et une troisième borne (13) connectée, au moins indirectement, à la région de la partie active dans laquelle les données sensibles sont traitées et/ou stockées, ledit transistor à grille flottante supplémentaire (12) étant réalisé de telle manière qu'il se trouve initialement dans un état passant et qu'une augmentation de son potentiel de grille le bloque.

10. Circuit intégré selon la revendication 1, **caractérisé en ce que** le circuit de protection (36) est susceptible de détecter une modification de la valeur d'un paramètre électrique de la surface de protection (31, 70) dépendant de ses caractéristiques géométriques.

11. Circuit intégré selon la revendication 10, **caractérisé en ce que** le circuit de protection comporte des moyens de détection d'une modification de la valeur de la résistance de la surface de protection (31, 70).

12. Circuit intégré selon la revendication 11, **caractérisé en ce que** la surface de protection est réalisée sous la forme d'une piste de conduction métallique (31) présentant des courbes sinueuses et connectée, d'une part, à la masse (33) de la source d'alimentation du circuit intégré et, d'autre part, à une borne d'entrée (35) du circuit de protection (36).

13. Circuit intégré selon la revendication 12, **caractérisé en ce que** le circuit de protection (36) comporte une résistance (39) connectée, d'une part, à la borne d'entrée (35) du circuit de protection (36) et, d'autre part, à une borne d'alimentation haute (40) reliée à la source d'alimentation du circuit intégré, le circuit de protection comportant en outre des moyens pour détecter une variation de la valeur du potentiel de la borne d'entrée (35) du circuit de protection et activer, le cas échéant, la mise en oeuvre des mesures de protection ou de destruction de la région dans laquelle les données sensibles sont traitées et/ou stockées.

14. Circuit intégré selon la revendication 10, **caractérisé en ce qu'**il comporte au moins une seconde surface de protection au moins partiellement superposée à la première surface de protection, les deux surfaces de protection étant séparées par au moins une couche de passivation pour former un condensateur de protection, le circuit de protection étant susceptible de détecter une modification de la valeur de la capacité dudit condensateur de protection.

15. Circuit intégré selon la revendication 14, **caractérisé en ce que** le circuit de protection comporte un condensateur connecté, d'une part, à la borne d'entrée du circuit de protection et, d'autre part, à une borne d'alimentation haute reliée à la source d'alimentation du circuit intégré, le circuit de protection comportant en outre des moyens pour détecter une variation de la valeur du potentiel de la borne d'entrée du circuit de protection et activer, le cas échéant, la mise en oeuvre des mesures de protection ou de destruction de la région dans laquelle les données sensibles sont traitées et/ou stockées.

16. Circuit intégré selon la revendication 13 ou 15, **caractérisé en ce qu'**un comparateur (38) est prévu pour détecter une variation du potentiel de la borne d'entrée (35) du circuit de protection (36) et, le cas échéant, générer sur sa borne de sortie (42) un signal pour activer la mise en oeuvre des mesures de protection ou de destruction de la région dans laquelle les données sensibles sont traitées et/ou stockées et, **en ce que** le circuit de protection (36) comporte en outre une borne d'alimentation haute (40) reliée à la source d'alimentation du circuit intégré, une borne (33) reliée à la masse du circuit intégré, une borne de sortie (45) reliée au moins indirectement à la région dans laquelle les données sensibles sont traitées et/ou stockées, un élément fusible (44) et, un transistor (43) dont la grille est connectée à la borne de sortie (42) du comparateur, ses deux autres bornes étant respectivement connectées à la masse et à la borne d'alimentation haute, l'élément fusible (44) étant connecté, d'une part, à la borne d'alimentation haute et, d'autre part, à la borne de sortie (42) du circuit de protection, le transistor (43) étant réalisé de telle manière qu'il se trouve initialement dans un état bloqué et qu'une modification de son potentiel de grille le rend passant entraînant un court-circuit entre la masse et la borne de sortie du circuit de protection à travers l'élément fusible (44).

17. Circuit intégré selon la revendication 13 ou 15, **caractérisé en ce qu'**un comparateur (38) est prévu pour détecter une variation du potentiel de la borne d'entrée (35) du circuit de protection (36) et, le cas échéant, générer sur sa borne de sortie (42) un signal pour activer la mise en oeuvre des mesures de protection ou de destruction de la région dans laquelle les données sensibles sont traitées et/ou stockées et, **en ce que** le circuit de protection comporte une borne d'alimentation haute reliée à la source d'alimentation du circuit intégré, une borne de sortie au moins indirectement connectée à la région dans laquelle les données sensibles sont traitées et/ou stockées et un transistor à grille flottante dont la grille est connectée à la borne de sortie du comparateur, ses deux autres bornes étant respectivement connectées à la borne d'alimentation haute et à la borne de sortie, ledit transistor à grille flottante étant réalisé de telle manière qu'il se trouve initialement dans un état passant et qu'une modification de son potentiel de grille le bloque.

18. Circuit intégré selon la revendication 11, **caractérisé en ce que** la surface de protection est réalisée sous la forme d'une piste de conduction métallique (70) présentant des courbes sinueuses et refermée sur elle-même, quatre points (71, 72, 73, 74) de connexion électrique étant prévus avec, respectivement, une borne d'alimentation haute (75) reliée à la source d'alimentation du circuit intégré, une première borne d'entrée (78) du circuit de protection (79), une seconde borne d'entrée (77) du circuit de protection (79) et la masse (76) de la source d'alimentation du circuit intégré, de manière à former quatre résistances (R₁, R₂, R₃, R₄) conformées en pont de Wheatstone, le circuit de protection (79) comportant des moyens de détection d'une variation de la valeur de la différence de potentiel entre ses deux bornes d'entrée (77, 78).

19. Circuit intégré selon la revendication 18, **caractérisé en ce que** le circuit de protection (79) comporte deux sous-circuits comparateurs (80, 81) recevant entre leurs bornes d'entrée (82, 83, 84, 85) respectives la différence de potentiel appliquée entre les bornes d'entrée (77, 78) du circuit de protection (79), au signe près, lesdits sous-circuits comparateurs (80, 81) ayant leurs bornes de sorties respectives (86, 87) connectées à un circuit sommateur logique (88) délivrant un signal de sortie en entrée d'un troisième sous-circuit comparateur (91) délivrant en sortie des signaux différents selon qu'une attaque a été portée ou non sur la surface de protection (70).
